# FASCICULE DE BREVET EUROPEEN

(11) **EP 2 708 465 B1**
(45) Date de publication et mention de la délivrance du brevet: **30.11.2016**
(21) Numéro de dépôt: 13181627.4
(22) Date de dépôt: 23.08.2013
(51) Int. Cl.: B64C 25/40

(54) **PROCÉDÉ DE FIXATION D'UN ORGANE D'ENTRAÎNEMENT DE ROUE D'AÉRONEF SUR L'ATTERRISSEUR PORTANT LA ROUE**
VERFAHREN ZUM BEFESTIGEN EINES FLUGZEUGRADANTRIEBS AM FAHRWERK
A METHOD OF FASTENING AN AIRCRAFT WHEEL DRIVE MEMBER ON AN UNDERCARRIAGE CARRYING A WHEEL

(30) Priorité: 17.09.2012 FR 1258715
(43) Date de publication de la demande: 19.03.2014
(73) Titulaire: Safran Landing Systems, 78140 Vélizy-Villacoublay (FR)
(72) Inventeur: REMOND, Sébastien, 78140 Velizy-Villacoublay (FR); CAMPBELL, Edouard, 78140 Velizy-Villacoublay (FR); BLANPAIN, Thierry, 78140 Velizy-Villacoublay (FR); TOVAR, Alexis, 78140 Velizy-Villacoublay (FR)
(74) Mandataire: Parzy, Benjamin Alain

(56) Documents cités:
- EP-A1- 2 243 703
- US-A1- 2011 156 472
- US-A1- 2011 297 786

## Description

L'invention est relative à un procédé de montage d'un organe d'entraînement de roue d'aéronef sur un atterrisseur portant la roue.

### ARRIERE PLAN DE L'INVENTION

Il est de plus en plus envisagé de munir les roues portées par les atterrisseurs principaux d'un aéronef d'organes d'entraînement propres à permettre le déplacement autonome de l'aéronef sans solliciter les groupes propulseurs de celui-ci. De telles roues sont en général équipées de freins comportant des actionneurs de freinage (hydrauliques ou électromécaniques) portés par un porte-actionneurs ou couronne, un tube de torsion autour duquel une pile de disques est agencée.

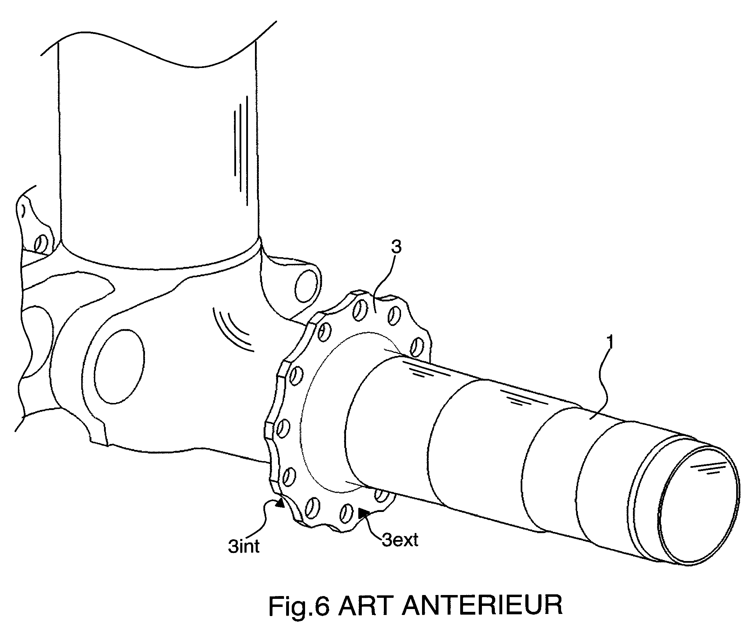

Les freins sont habituellement montés autour de l'essieu qui porte la roue et sont associés à l'atterrisseur de plusieurs manières. Ils peuvent être simplement montés tournants sur l'atterrisseur, en étant arrêtés en rotation sur l'essieu soit par une barre de frein (comme sur l'AIRBUS A340), soit par un toc solidaire de l'atterrisseur (comme sur le BOEING B737). Le frein peut encore être fixé à une main d'essieu, c'est-à-dire un flasque venu de matière avec l'essieu (comme sur l'AIRBUS A320), comme illustré à la figure 6 qui sera détaillée plus loin.

Il a été proposé dans le document FR 2 954 752 de fixer un tel organe d'entraînement directement sur la couronne du frein. Cependant, cette disposition oblige à modifier les freins existants ou en concevoir un nouveau pour y intégrer l'organe d'entraînement.

Il a été identifié un besoin de proposer un organe d'entraînement indépendant du frein, ce qui facilite la maintenance de ces deux éléments et permet de proposer l'organe d'entraînement en option.

### OBJET DE L'INVENTION

L'invention a pour but de proposer un procédé de montage d'un organe d'entraînement de roue d'aéronef sur l'atterrisseur portant la roue, particulièrement adapté à un atterrisseur dont le ou les essieux sont équipés de mains d'essieu.

### RESUME DE L'INVENTION

En vue de la réalisation de ce but, on propose selon l'invention un procédé de montage d'un organe d'entraînement de roue d'aéronef sur un atterrisseur ayant un essieu qui porte la roue et qui est équipé d'une main d'essieu ayant une face externe contre laquelle un frein peut être rapporté, le procédé comportant l'étape de rapporter un support prenant appui sur une face interne de la main d'essieu qui est opposée à la face externe et de rapporter l'organe d'entraînement sur ce support.

Par externe, on désigne la face de la main d'essieu tournée vers l'extrémité de l'essieu et contre laquelle le frein est rapporté, et par interne, la face de la main d'essieu tournée vers la tige ou le balancier qui porte l'essieu.

Ainsi, on utilise la face interne de la main d'essieu pour y rapporter un support capable de recevoir l'organe d'entraînement. Ce montage est parfaitement compatible avec le frein existant, et évite toute modification de l'atterrisseur pour recevoir ledit organe d'entraînement.

Selon un autre aspect particulier de l'invention, la fixation du support sur la main d'essieu est réalisée en utilisant au moins un boulon ayant un corps fileté sur lequel un écrou est adapté pour pincer le support et la main d'essieu entre une tête du corps et l'écrou, le corps de boulon comportant une portée de centrage dans un orifice de la main d'essieu dans lequel il est introduit.

### BREVE DESCRIPTION DES DESSINS

L'invention sera mieux comprise à la lumière de la description qui suit de modes particuliers de réalisation non limitatifs, en référence aux figures des dessins annexés parmi lesquelles :
- la figure 1 est une vue en perspective d'un support en deux parties selon un premier mode particulier de réalisation de l'invention ;
- la figure 2 est une vue en perspective du support de la figure 1 en place sur la main d'essieu de l'atterrisseur ;
- la figure 3 est une vue en perspective coupée au niveau de l'un des boulons de fixation du support de la figure 1 sur la main d'essieu ;
- la figure 4 est une vue en perspective du corps de boulon illustré à la figure 3 ;
- la figure 5 est une vue en perspective de l'atterrisseur muni de son support et d'un organe d'entraînement de la roue ;
- la figure 6 est une vue en perspective partielle d'un atterrisseur connu en soi muni d'un essieu comportant une main d'essieu ;
- la figure 7 est une vue en perspective d'un support selon un deuxième mode de réalisation de l'invention ;
- la figure 8 est une vue en perspective d'un support selon un troisième mode de réalisation de l'invention ;
- la figure 9 est une vue en coupe du support de la figure 8 en place sur la main d'essieu.

### DESCRIPTION DETAILLEE DE L'INVENTION

L'invention est destinée plus particulièrement aux atterrisseurs d'aéronefs tels que ceux illustrés à la figure 6 et qui comportent un essieu 1 destiné à recevoir une roue (non représentée ici). De façon connue en soi, la roue est ici rapportée à rotation sur l'essieu au moyen de deux roulements à rouleaux coniques, un écrou vissé sur l'extrémité de l'essieu assurant l'immobilisation axiale de la roue et la précontrainte des roulements. Préalablement à la mise en place de la roue sur l'essieu, un frein est monté sur l'essieu pour être fixé contre la face externe 3ext d'une main d'essieu 3 au moyen de boulons. Tout ceci est bien connu et n'est rappelé qu'à titre informatif.

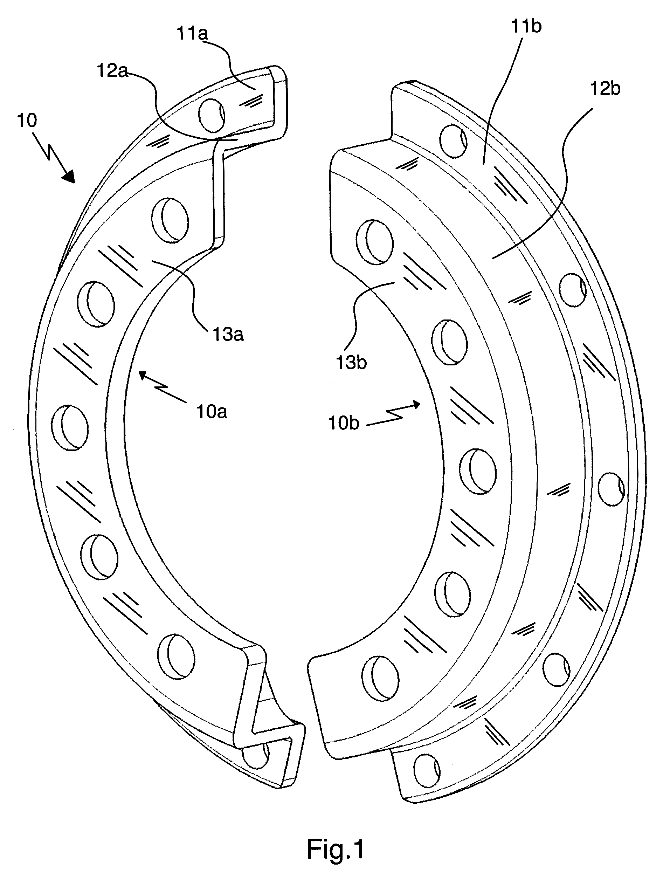

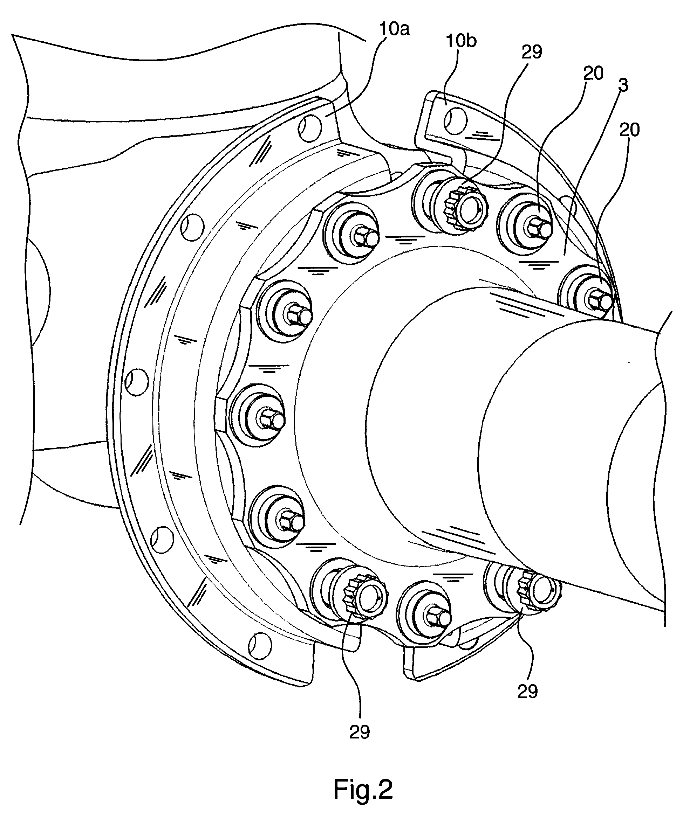

Un des buts de l'invention est de permettre la fixation d'un organe d'entraînement en rotation de la roue sans remettre en cause l'architecture de l'atterrisseur et du frein. Conformément à un premier mode de réalisation de l'invention illustré aux figures 1 à 5, on rapporte sur l'atterrisseur un support 10, qui comme illustré à la figure 1, comporte ici deux demi-supports 10a et 10b. Chaque demi-support 10a, 10b comporte une collerette externe 11a, 11b percée afin de recevoir des boulons de fixation de l'organe d'entraînement en rotation. Chaque collerette externe 11a, 11b est tenue par une jupe 12a, 12b, elle-même terminée par une collerette interne 13a, 13b également percée afin de recevoir des boulons de fixation des demi-supports 10a, 10b sur la main d'essieu 3. Sur la figure 2, on distingue les demi-supports 10a, 10b boulonnés à la main d'essieu 3 en prenant appui sur la face interne 3int de la main d'essieu 3, c'est-à-dire la face opposée à celle contre laquelle le frein 2 est appuyé.

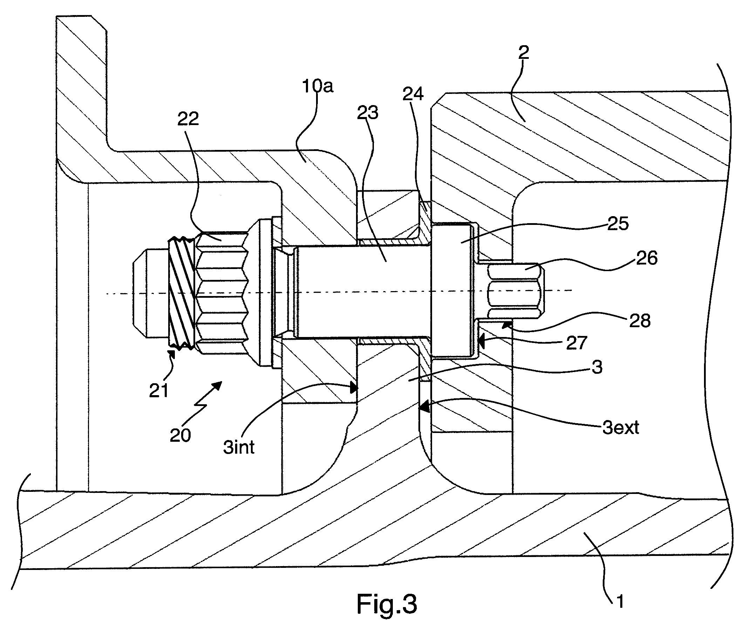

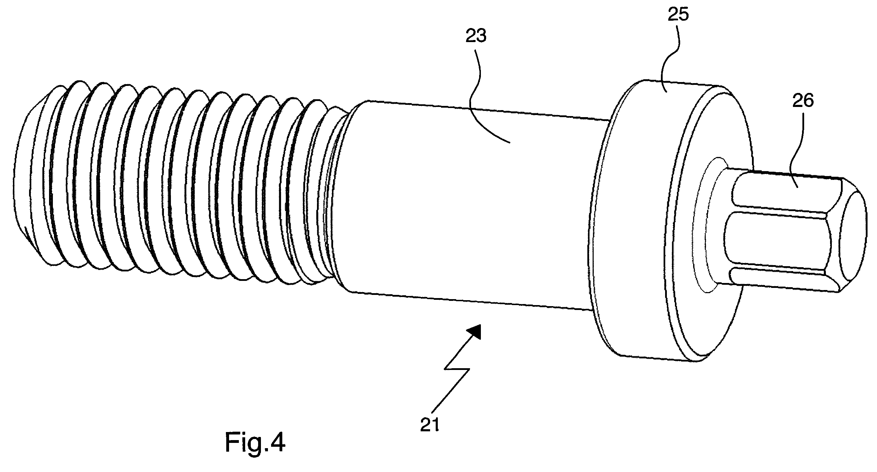

Comme cela est plus particulièrement visible sur les figures 3 et 4, les boulons 20 de fixation des demi-supports 10a, 10b à la main d'essieu 3 comportent un corps de boulon 21 avec une extrémité filetée sur laquelle un écrou 22 est rapporté, du côté du demi-support. Le corps de boulon 21 comporte par ailleurs une portée de centrage 23 qui coopère avec une douille 24 pour son centrage dans l'orifice de la main d'essieu 3 dans lequel le corps de boulon 21 est engagé. A son autre extrémité, le corps de boulon 21 porte une tête 25 venant prendre appui contre la face externe de la main d'essieu 3 (ici par l'intermédiaire d'une collerette de la douille 24), de sorte que le support et la main d'essieu sont pincés entre la tête 25 et l'écrou 22. A cet effet, et comme cela est visible sur la figure 3, la face arrière du frein présente des lamages 27 pour recevoir avec un faible jeu circonférentiel la tête 25 du corps de boulon 21 en regard et ainsi permettre l'appui de la face arrière du frein 2 contre la main d'essieu. La tête 25 sert ici de positionneur pour le frein relativement à la main d'essieu 3. Comme cela est plus particulièrement visible à la figure 4, La tête 25 porte un têton 26, ici de section sensiblement hexagonale, qui s'étend en saillie de celle-ci pour faciliter la mise en place du boulon 20. Au fond de chaque lamage 27 s'étend un orifice 28 adapté à recevoir le têton 26. Le frein 2 est fixé à la main d'essieu par des boulons 29 (visibles à la figure 2) montés dans le sens opposé au sens de fixation des boulons 20 servant à fixer le support 10 sur la main d'essieu 3.

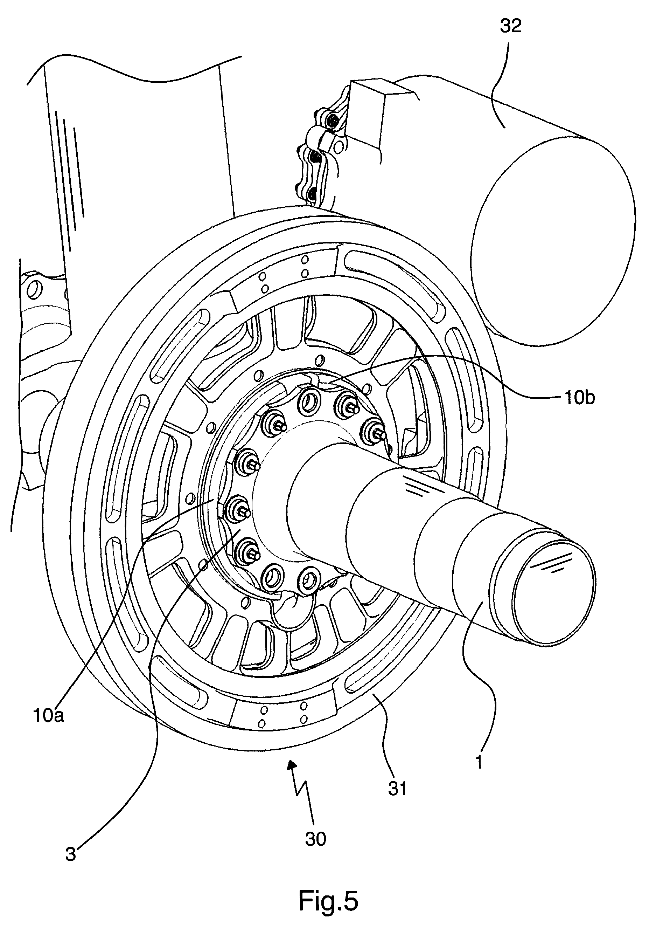

Sur la figure 5 a été illustré le montage d'un organe d'entraînement en rotation 30 qui comporte ici un carter 31 en forme de couronne qui est rapporté sur la collerette externe du support 10. On distingue le moteur 32 de l'organe d'entraînement en rotation 30 qui est porté par le carter 31. Grâce au support de l'invention fixé sur la face arrière de la collerette, l'organe d'entraînement 30 peut être fixé de façon démontable, et présenté en option aux compagnies aériennes, y compris sur des atterrisseurs existants.

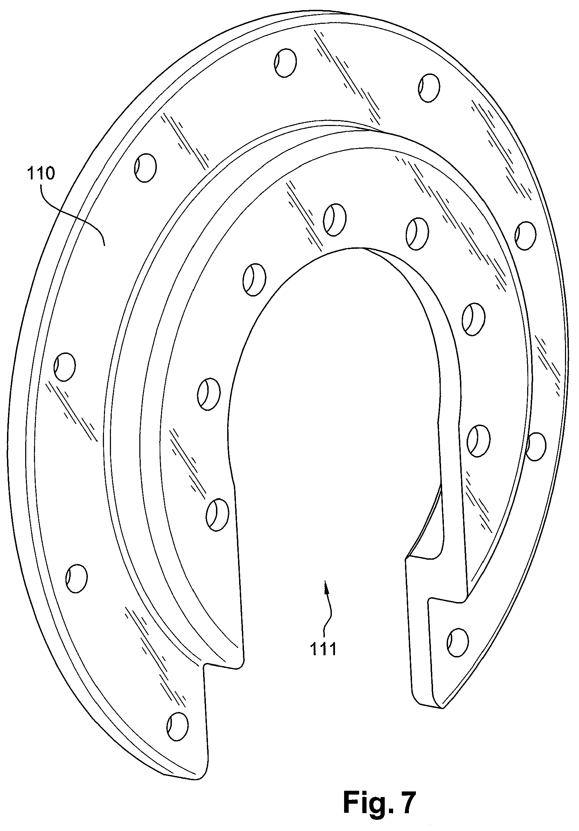

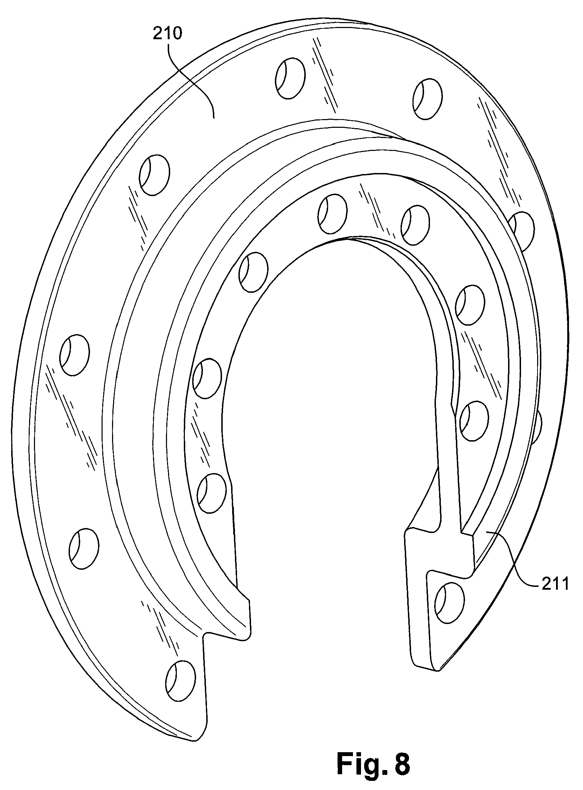

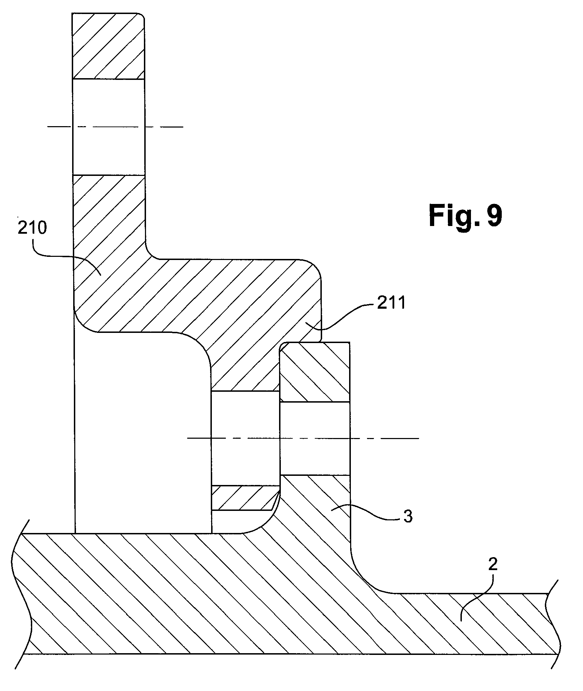

Selon un deuxième mode de réalisation de l'invention illustré à la figure 7, le support de l'invention 110 est ici en une pièce qui présente une ouverture 111 permettant sa mise en place contre la face interne 3int de la main d'essieu 3 en venant chevaucher la partie de l'essieu comprise entre la jambe de l'atterrisseur et la main d'essieu. De même que pour le premier mode de réalisation, le support 110 est percé pour recevoir des boulons de fixation. Selon un troisième mode de fixation illustré aux figures 8 et 9, le support 210 est également en une pièce. Cependant, le support 210 comporte une collerette 211 qui s'étend en saillie pour permettre le centrage du support 210 sur la périphérie de la main d'essieu.

L'invention n'est pas limitée à ce qui vient d'être décrit mais englobe toute variante entrant dans le cadre défini par les revendications.

## Revendications

1. Procédé de montage d'un organe d'entraînement (30) de roue d'aéronef sur un atterrisseur ayant un essieu (1) qui porte la roue et qui est équipé d'une main d'essieu (3) ayant une face externe contre laquelle un frein peut être rapporté, le procédé comportant l'étape de rapporter un support (10 ; 110 ; 210) prenant appui contre une face interne de la main d'essieu qui est opposée à la face externe et de rapporter l'organe d'entraînement sur ce support.

2. Procédé de montage selon la revendication 1, dans lequel le support (10) comprend deux demi-supports qui sont chacun rapportés contre la face interne de la main-d'essieu pour être boulonnés sur celle-ci.

3. Procédé de montage selon la revendication 1, dans lequel la fixation du support sur la main d'essieu est réalisée en utilisant au moins un boulon (20) introduit dans un orifice de la main d'essieu et qui comprend un corps de boulon (21) fileté sur lequel un écrou (22) est adapté pour pincer le support et la main d'essieu entre une tête (25) du corps et l'écrou.

4. Procédé de montage selon la revendication 3, dans lequel le corps de boulon comprend une partie lisse (23) pour son centrage dans l'orifice de la main d'essieu.

5. Procédé de montage selon la revendication 4, dans lequel la tête (25) du boulon est reçue dans un lamage du frein avec un faible jeu circonférentiel pour positionner le frein relativement à la main d'essieu.

6. Procédé de montage selon la revendication 1, dans lequel le support est en une seule pièce (110 ; 210) et comporte une ouverture pour permettre sa mise en place contre la face interne de la main d'essieu.

7. Procédé de montage selon la revendication 2, dans lequel le support (210) comporte une collerette (211) pour son centrage sur une périphérie de la main d'essieu.

## Patentansprüche

1. Verfahren zum Montieren eines Antriebselements (30) zum Antrieb eines Luftfahrzeugrades an einem Fahrwerk, das eine Achse (1) hat, die das Rad trägt und die mit einer Achsaufnahme (3) versehen ist, die eine Außenfläche hat, an der eine Bremse befestigt werden kann, wobei das Verfahren den Schritt des Befestigens eines Trägers (10; 110; 210) umfasst, der an einer der Außenfläche abgewandten Innenfläche der Achsaufnahme zur Anlage kommt, sowie des Befestigens des Antriebselements an diesem Träger.

2. Montageverfahren nach Anspruch 1, wobei der Träger (10) zwei Halbträger umfasst, die jeweils an der Innenfläche der Achsaufnahme angesetzt werden, um an diese geschraubt zu werden.

3. Montageverfahren nach Anspruch 1, wobei die Befestigung des Trägers an der Achsaufnahme dadurch erfolgt, dass mindestens ein in eine Öffnung der Achsaufnahme eingefügter Bolzen (20) verwendet wird, der einen mit einem Gewinde versehenen Bolzenkörper (21) umfasst, an dem eine Mutter (22) angebracht ist, um den Träger und die Achsaufnahme zwischen einem Kopf (25) des Körpers und der Mutter einzuklemmen.

4. Montageverfahren nach Anspruch 3, wobei der Bolzenkörper einen glatten Abschnitt (23) für seine Zentrierung in der Öffnung der Achsaufnahme umfasst.

5. Montageverfahren nach Anspruch 4, wobei der Kopf (25) des Bolzens mit einem geringen Umfangsspiel in einer Senke der Bremse aufgenommen wird, um die Bremse relativ zur Achsaufnahme zu positionieren.

6. Montageverfahren nach Anspruch 1, wobei der Träger einstückig (110; 210) ausgebildet ist und eine Öffnung umfasst, um sein Platzieren an der Innenfläche der Achsaufnahme zu gestatten.

7. Montageverfahren nach Anspruch 2, wobei der Träger (210) einen Kragen (211) für seine Zentrierung an einem Umfang der Achsaufnahme umfasst.

## Claims

1. A method of mounting an aircraft wheel drive member (30) on an undercarriage having an axle (1) that carries the wheel and that is provided with a torque plate (3) having an outside face against which a brake can be fitted, the method comprising the steps of fitting a support (10; 110; 210) that bears against an inside face of the torque plate opposite from its outside face, and of fitting the drive member on the support.

2. A mounting method according to claim 1, wherein the support (10) comprises two half-supports, each of which is fitted against the inside face of the torque plate in order to be bolted thereto.

3. A mounting method according to claim 1, wherein the support is fastened on the torque plate by using at least one bolt (20) inserted in an orifice of the torque plate and having a threaded bolt shank (21) on which a nut (22) is fitted to clamp together the support and the torque plate between a head (25) of the shank and the nut.

4. A mounting method according to claim 3, wherein the bolt shank includes a smooth portion (23) for centering it in the orifice of the torque plate.

5. A mounting method according to claim 4, wherein the head (25) of the bolt is received in the spot face of the brake with a small amount of circumferential clearance in order to position the brake relative to the torque plate.

6. A mounting method according to claim 1, wherein the support is made as a single piece (110; 210) and has an opening to enable it to be put into place against the inside face of the torque plate.

7. A mounting method according to claim 2, wherein the support (210) has a collar (211) for centering it on a periphery of the torque plate.
